# EUROPEAN PATENT APPLICATION

(11) **EP 4 716 369 A1**
(43) Date of publication of application: **25.03.2026**
(21) Application number: 25195503.5
(22) Date of filing: 12.08.2025
(51) Int. Cl.: H05B 6/64

(54) **HEATING COOKER**

(30) Priority: 20.09.2024 JP 2024163527
(71) Applicant: Sharp Kabushiki Kaisha, Sakai City, Osaka 590-8522 (JP)
(72) Inventor: YACHI, Mariko, Sakai City, 590-8522 (JP); KITAURA, Tomohiro, Sakai City, 590-8522 (JP); MORIMOTO, Shigenori, Sakai City, 590-8522 (JP)
(74) Representative: Treeby, Philip David William

(57) **Abstract**

A heating cooker (100) includes a heating chamber (2) and an imaging device (4). The heating chamber (2) has a panel member (3) surrounding an inner space (Sp1) capable of accommodating a heating object, and heats a heating object using an electromagnetic wave. The imaging device (4) is arranged outside the heating chamber (2), and captures the inner space (Sp1) through an opening portion (511) formed in a part of the panel member (3). The panel member (3) includes a support frame (51) in which the opening portion (511) is formed, and a panel body (30) in which a through hole (310) communicating with the opening portion (511) is formed and to which the support frame (51) is fixed. The imaging device (4) is fixed to the panel body (30) by the support frame (51) in a state of being integrated with the support frame (51) interposed between them.

## Description

### BACKGROUND OF THE INVENTION

### 1. TECHNICAL FIELD

The present disclosure relates to a heating cooker.

### 2. DESCRIPTION OF THE RELATED ART

As a related art, a heating cooker such as a microwave oven that irradiates a heating object (object to be heated) in a heating chamber with an electromagnetic wave (microwave) to heat the heating object is known (see, for example, JP 2019-190771 A). The heating cooker according to the related art includes an imaging device (camera) that captures (shoots) the inside of the heating chamber.

The imaging device is arranged on an upper wall of the heating chamber so as to face the inside of the heating chamber, and shoots the inside of the heating chamber through an opening (top plate opening) provided in a top plate portion of the heating chamber. The upper wall of the heating chamber is provided with a wall surface opening, and a wall surface recessed portion formed in a recessed shape is provided upward from a peripheral edge of the wall surface opening. A recessed bottom portion opening which is an opening for shooting is provided at a bottom portion, that is, on the upper side, of the wall surface recessed portion. A side wall of the wall surface recessed portion has a tapered shape that narrows from the heating chamber side toward the wall surface opening side. A substantially flat plate-shaped top plate portion in which an opening (top plate opening) is formed is provided below the upper wall so as to be parallel to the upper wall. A cross-sectional area of an opening surface of the recessed bottom portion opening is smaller than a cross-sectional area of an opening surface of the wall surface opening. As described above, by making an opening portion of the recessed bottom portion opening smaller, it is possible to suppress leakage of an electromagnetic wave from the inside of the heating chamber while securing a wide visual field range.

### SUMMARY OF THE INVENTION

In the configuration of the above related art, leakage of an electromagnetic wave from an opening portion can be suppressed by making the opening portion as small as possible, but a problem that a peripheral edge of the opening portion is shown in the imaging device due to slight misalignment between the opening portion and the imaging device easily occurs.

An object of the present disclosure is to provide a heating cooker that easily achieves both prevention of leakage of an electromagnetic wave and securing of a visual field of an imaging device.

A heating cooker according to one aspect of the present disclosure includes a heating chamber and an imaging device. The heating chamber has a panel member surrounding an inner space capable of accommodating a heating object, and heats the heating object using electromagnetic waves. The imaging device is arranged outside the heating chamber and captures the inner space through an opening portion formed in a part of the panel member. The panel member includes a support frame in which the opening portion is formed, and a panel body in which a through hole communicating with the opening portion is formed and to which the support frame is fixed. The imaging device is fixed to the panel body with the support frame interposed between them in a state of being integrated with the support frame.

According to the present disclosure, it is possible to provide a heating cooker that easily achieves both prevention of leakage of an electromagnetic wave and securing of a visual field of an imaging device.

### BRIEF DESCRIPTION OF THE DRAWINGS

FIG. 1 is a schematic perspective view of a heating cooker according to a first embodiment;
FIG. 2 is a schematic perspective view of a main part of the heating cooker according to the first embodiment as viewed obliquely from below;
FIG. 3 is a schematic perspective view of a main part of the heating cooker according to the first embodiment as viewed obliquely from above;
FIG. 4 is a schematic perspective view of a main part of the heating cooker according to the first embodiment;
FIG. 5 is a schematic exploded perspective view of a main part of the heating cooker according to the first embodiment as viewed obliquely from below;
FIG. 6 is a schematic exploded perspective view of a main part of the heating cooker according to the first embodiment as viewed obliquely from above;
FIG. 7 is a schematic exploded perspective view of a main part of the heating cooker according to the first embodiment;
FIG. 8 is a schematic cross-sectional view of a main part of the heating cooker according to the first embodiment; and
FIG. 9 is a cross-sectional view taken along line A1-A1 of FIG. 8, illustrating a main part of the heating cooker according to the first embodiment.

### DETAILED DESCRIPTION

Hereinafter, an embodiment of the present disclosure will be described with reference to the accompanying drawings. An embodiment below is an example embodying the present disclosure, and is not intended to limit the technical scope of the present disclosure.

### FIRST EMBODIMENT

### [1] GENERAL OUTLINE

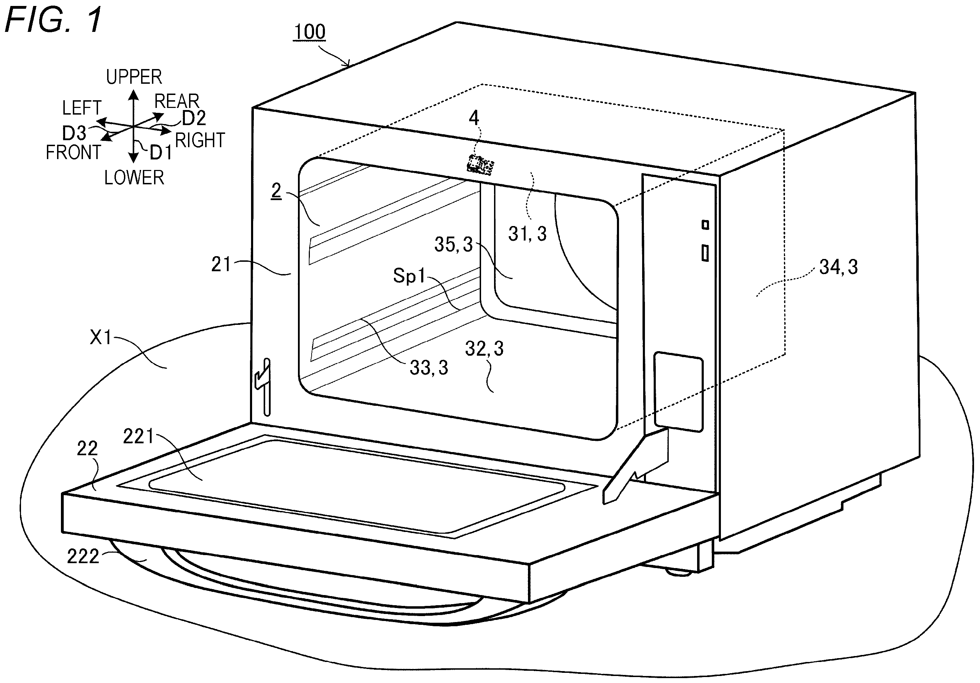

First, an outline of a heating cooker 100 according to the present embodiment will be described with reference to FIG. 1.

The heating cooker 100 according to the present embodiment heats, for example, a food, a food product, a beverage, or various other heating objects. The heating cooker 100 irradiates a heating object in a heating chamber 2 with an electromagnetic wave to heat the heating object, like a microwave oven, for example. The heating cooker 100 only needs to have a function of heating a heating object using at least an electromagnetic wave, and may have, for example, a grill function, an oven function of heating with convective heat, and/or a steam function of heating with water vapor.

The "electromagnetic wave" in the present disclosure means a physical phenomenon in which electromagnetic energy propagates in space while vibrating, and includes a radio wave and light. The heating cooker 100 irradiates a heating object in the heating chamber 2 with a microwave that is an electromagnetic wave of 2.45 GHz as an example. By this, an electromagnetic wave (microwave) vibrates a water molecule and the like in a heating object, and temperature of the entire heating object rises.

There are two types of the heating cooker 100 of this type, that is, "flat table type" and "turn table type". A flat table type heating cooker includes an antenna below a bottom surface of a heating chamber, and irradiates the inside of the heating chamber with an electromagnetic wave from the antenna while rotating the antenna, so as to efficiently diffuse the electromagnetic wave in the heating chamber to evenly heat a heating object. A turn table type heating cooker includes a turn table on which a heating object is placed in a heating chamber, and irradiates the inside of the heating chamber with an electromagnetic wave from a fixed antenna while rotating the turn table, so as to evenly heat a heating object on the turn table. In the present embodiment, as an example, the heating cooker 100 is a flat table type microwave oven.

The heating cooker 100 is, for example, an electric device that operates by receiving power supply from a power system (AC power supply). That is, the heating cooker 100 operates to heat a heating object by irradiating the heating object with an electromagnetic wave by receiving power supply.

As illustrated in FIG. 1, for example, the heating cooker 100 is used while being placed on an installation surface X1 including a shelf, a counter, or the like of a house. The heating cooker 100 stands independently on the installation surface X1 while being placed on the installation surface X1. That is, the heating cooker 100 according to the present embodiment is a self-standing and portable device, and the user can install the heating cooker 100 at an optional position on the installation surface X1.

In the present embodiment, for convenience of description, a vertical direction in a state where the heating cooker 100 can be used is defined as an up-down direction D1. Further, a left-right direction D2 is defined with reference to a direction in which the heating cooker 100 is viewed from the front, and a front-rear direction D3 is defined with the front surface side of the heating cooker 100 as the front side and the rear surface side as the rear side. However, these directions are not intended to limit a use direction (direction at the time of use) of the heating cooker 100.

The heating cooker 100 includes the heating chamber 2 capable of accommodating a heating object, and a heating source for heating the heating object. The heating source irradiates a space (inner space Sp1) in the heating chamber 2 with an electromagnetic wave to heat a heating object accommodated in the heating chamber 2.

In the present embodiment, the heating chamber 2 has a hollow rectangular parallelepiped shape, and includes a box body 21 and a door body 22. The box body 21 is formed in a box shape with one surface (front surface in the present embodiment) opened. The door body 22 is attached to the box body 21 in a state where an opening surface (front surface in the present embodiment) of the box body 21 can be opened and closed.

Here, the door body 22 is supported to be openable and closable with respect to the box body 21 by a support portion (hinge) provided in a lower portion on the front surface side of the box body 21. An upper portion of the door body 22 falls to the front side to be at an open position (see FIG. 1), and stands to the back side to be at a closed position. Furthermore, the door body 22 includes a door window 221 through which the inside of the heating chamber 2 (inner space Sp1) can be visually recognized through the door body 22, and a handle 222 that can be gripped by the user.

The door window 221 includes a double glass structure including inner glass facing the inside (inner space Sp1) of the door body 22 and outer glass facing the outside of the door body 22. The door window 221 includes punching metal which is a metal plate (or a metal sheet) having a large number of holes. Provision of the punching metal prevents an electromagnetic wave from leaking out of the heating chamber 2 through the door window 221.

As illustrated in FIG. 1, when the door body 22 is in an open state (at an open position), the inner space Sp1 in the heating chamber 2 is exposed from the front surface of the box body 21, so that a heating object can be put in and taken out of the heating chamber 2. On the other hand, when the door body 22 is in a closed state (at a closed position), the inner space Sp1 in the heating chamber 2 is in a sealed state, so that a heating object accommodated in the heating chamber 2 can be heated.

Therefore, the user first puts a heating object into the heating chamber 2 with the door body 22 opened, and closes the door body 22. In this state, the heating object in the heating chamber 2 is irradiated with an electromagnetic wave from a heating source so that the heating object is heated. Then, after the heating object is heated, the user opens the door body 22 and takes out the heating object from the heating chamber 2.

Here, the heating chamber 2 includes a panel member 3 surrounding the inner space Sp1. The panel member 3 is a member constituting an inner surface (inner side surface) of the heating chamber 2. An inner surface of the heating chamber 2 includes an upper surface (top surface), a lower surface (bottom surface), a left side surface, a right side surface, a back surface, and a front surface of the inner space Sp1. That is, the panel member 3 is provided at each portion facing the inner space Sp1 of the box body 21 and the door body 22.

In the present embodiment, as an example, as illustrated in FIG. 1, the box body 21 includes a first panel 31, a second panel 32, a third panel 33, a fourth panel 34, and a fifth panel 35 as the panel members 3. The first panel 31 constitutes an upper surface (top surface) of the inner space Sp1, and the second panel 32 constitutes a lower surface (bottom surface) of the inner space Sp1. The third panel 33 constitutes a left side surface of the inner space Sp1, the fourth panel 34 constitutes a right side surface of the inner space Sp1, and the fifth panel 35 constitutes a rear surface of the inner space Sp1.

In other words, a space surrounded by the panel member 3 is an inner space of the heating chamber 2 (that is, the inner space Sp1) capable of accommodating a heating object. The panel member 3 is made from metal so as to reflect an electromagnetic wave emitted into the heating chamber 2. That is, the panel member 3 is made from metal, reflects an electromagnetic wave with which the inner space Sp1 is irradiated, and efficiently irradiates a heating object with an electromagnetic wave.

In the present embodiment, as an example, only the box body 21 is provided with the first panel 31 to the fifth panel 35 as the panel member 3, and each of the first panel 31 to the fifth panel 35 is constituted by a metal plate having predetermined thickness. However, the panel member 3 may be divided into a plurality of members, and for example, the second panel 32, the third panel 33, the fourth panel 34, and the like may be integrally constituted.

Here, at least the first panel 31 to the fifth panel 35 as the panel member 3 are electrically connected to a grounding point electrically connected to, for example, a ground terminal of an outlet with a ground terminal. That is, as the first panel 31 to the fifth panel 35 are grounded, a shielding effect against an electromagnetic wave (here, microwave) is enhanced. Therefore, an electromagnetic wave is shielded by the panel member 3, and hardly leaks to the outside of the heating chamber 2 (to the outside of the inner space Sp1).

Further, the heating cooker 100 according to the present embodiment further includes a power supply unit, an operation unit, a control unit, and the like. Furthermore, the heating cooker 100 further includes various sensors such as a weight sensor and a temperature sensor.

The operation unit is arranged on a front surface of the door body 22, for example. The operation unit includes a plurality of buttons, dials, and the like that can be pressed and operated by the user. The operation unit receives, for example, start and stop of heating of a heating object, setting operation of heating intensity, heating time, and heating mode, and the like.

The control unit is electrically connected to a heating source, a power supply unit, an operation unit, and the like. The control unit mainly includes a computer system including one or more processors such as a central processing unit (CPU) and one or more memories such as a read only memory (ROM) and a random access memory (RAM), and executes various types of processing (information processing). The control unit controls each unit of the heating cooker 100 according to operation of the operation unit.

The heating cooker 100 according to the present embodiment further includes an imaging device 4 that captures the inner space Sp1. The imaging device 4 is a camera including an imaging element (photoelectric conversion element) such as a charge coupled device (CCD) sensor or a complementary metal-oxide-semiconductor (CMOS) sensor. The imaging device 4 including a camera includes an optical system such as a lens in addition to an imaging element, and outputs an image of the inner space Sp1 as needed.

In the present embodiment, the imaging device 4 is connected to the control unit, and an image captured by the imaging device 4 is input to the control unit regularly or irregularly. The control unit performs appropriate image processing on an image of the inside of the heating chamber 2 (inner space Sp1) to monitor a state of the inside of the heating chamber 2 to be used for favorable control of each part of the heating cooker 100.

As an example, the control unit estimates what a heating object accommodated in the heating chamber 2 is, or in what state (presence or absence of a lid) the heating object is accommodated based on an image acquired from the imaging device 4, and automatically sets heating intensity, heating time, a heating mode, and the like. Further, the control unit may use an image acquired from the imaging device 4 to detect whether a heating object is put into or taken out of the heating chamber 2, detect dirt in the heating chamber 2 (or on the door window 221), and monitor other parts (including the outside of the heating chamber 2).

Here, the imaging device 4 is fixed to the panel member 3 surrounding the inner space Sp1 such that the inner space Sp1 is included in a field of view. In the present embodiment, in particular, the imaging device 4 is fixed obliquely downward to the first panel 31 constituting an upper surface (top surface) of the inner space Sp1 of the panel member 3. By this, the imaging device 4 can capture the inner space Sp1 as looking down from obliquely above.

### [2] DETAILED CONFIGURATION AROUND IMAGING DEVICE

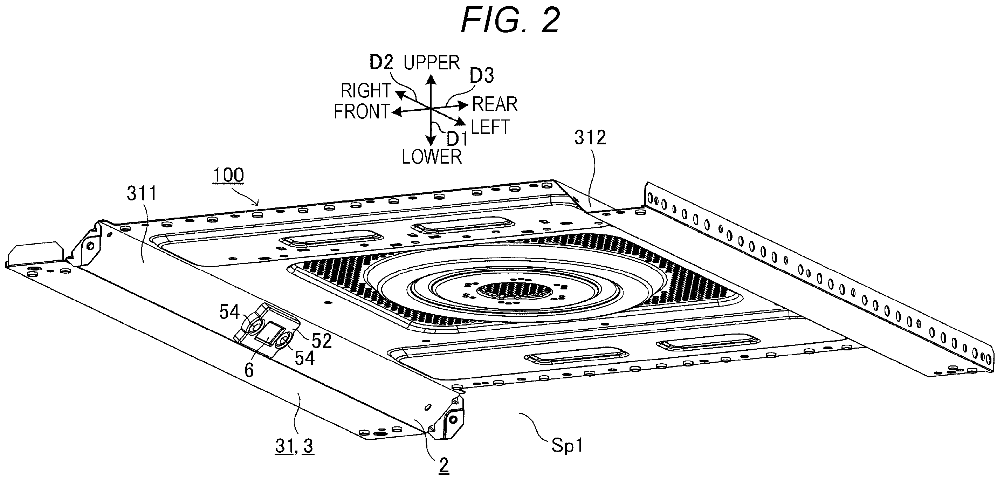

Next, a more detailed configuration around the imaging device 4 (camera) in the heating cooker 100 according to the present embodiment will be described with reference to FIGS. 2 to 9.

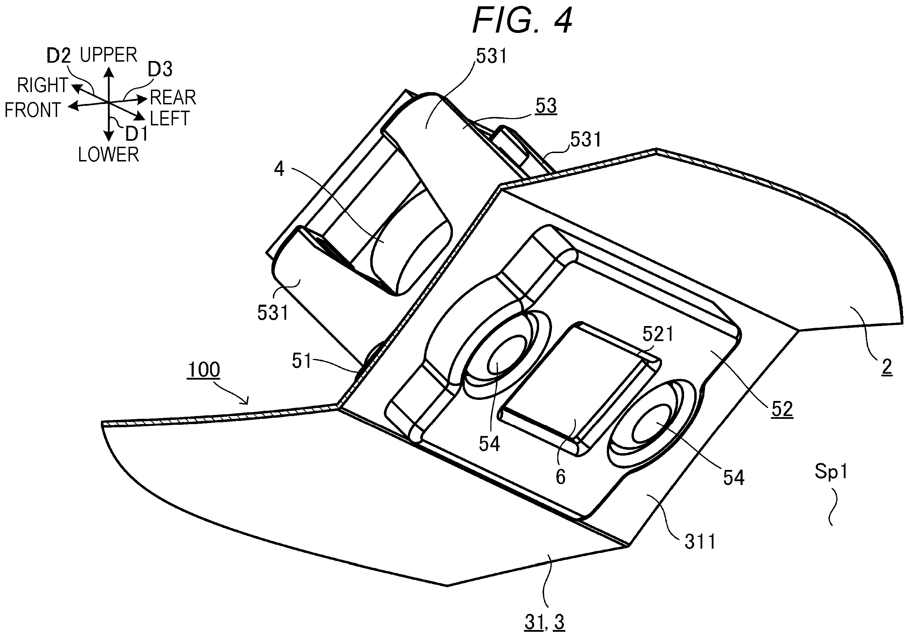

In FIGS. 2 to 9, only the first panel 31 to which the imaging device 4 is fixed, the imaging device 4, and peripheral members of the imaging device 4 such as a support frame 51 and a glass holder 52 are illustrated, and illustration of other members is appropriately omitted. Further, in FIGS. 4 to 9, only a portion around the imaging device 4 is cut out and illustrated with respect to the first panel 31.

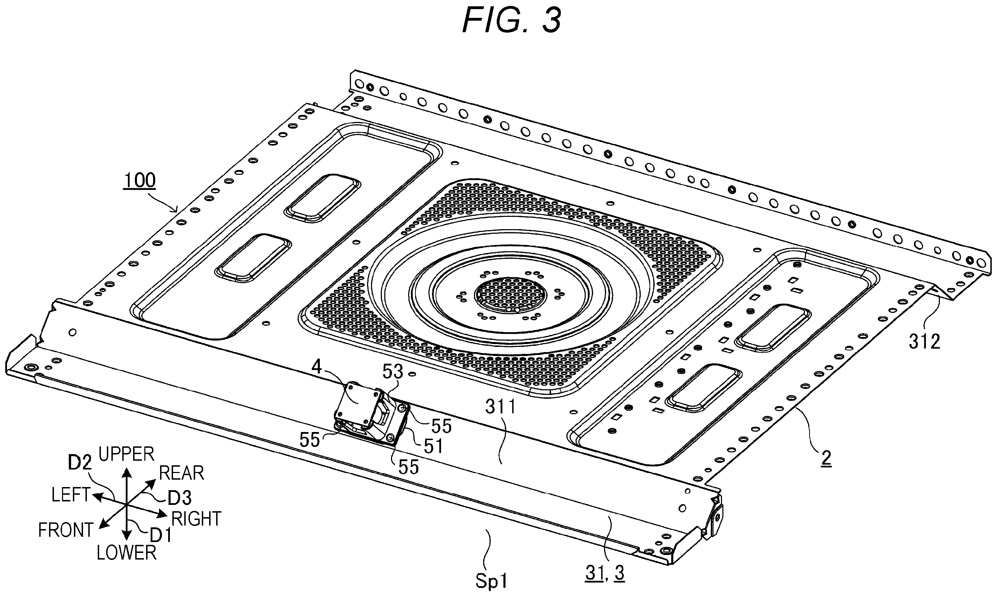

As illustrated in FIGS. 2 and 3, the heating cooker 100 according to the present embodiment includes the support frame 51, the glass holder 52, a camera holder 53, screws 54 and 55, the glass 6, and the like.

The imaging device 4 is fixed to a central portion in the left-right direction D2 of a front end portion of the first panel 31. Specifically, the first panel 31 is formed by bending a metal plate, and has inclined portions 311 and 312 inclined so as to be lower toward both end sides in the front-rear direction D3 at both end portions in the front-rear direction D3.

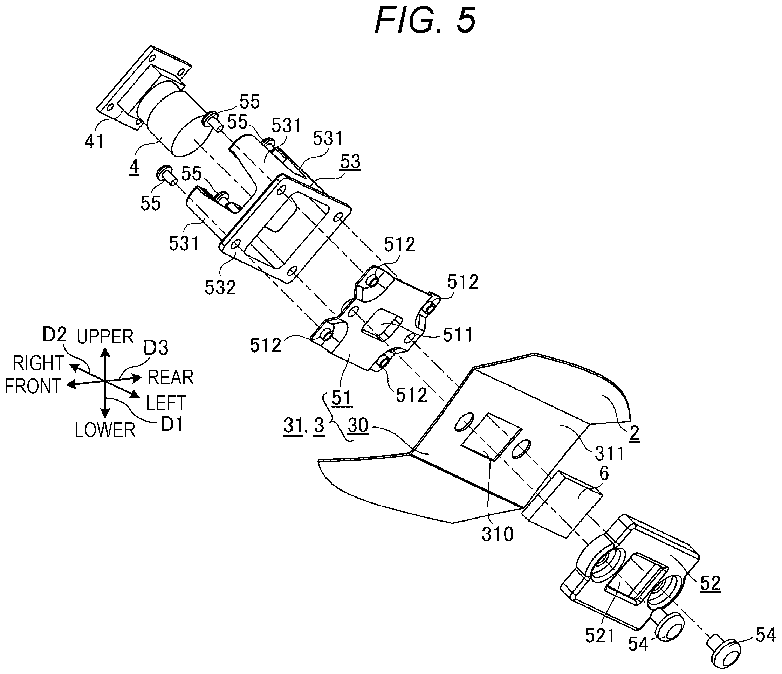

The imaging device 4 is supported by the inclined portion 311 on the front side of the first panel 31. More specifically, a through hole 310 (see FIG. 5) is formed at a central portion in the left-right direction D2 of the inclined portion 311 of the first panel 31. The through hole 310 is a through hole penetrating (the inclined portion 311 of) the first panel 31 in a thickness direction. Here, as an example, the through hole 310 is opened in a rectangular shape having length in the left-right direction D2.

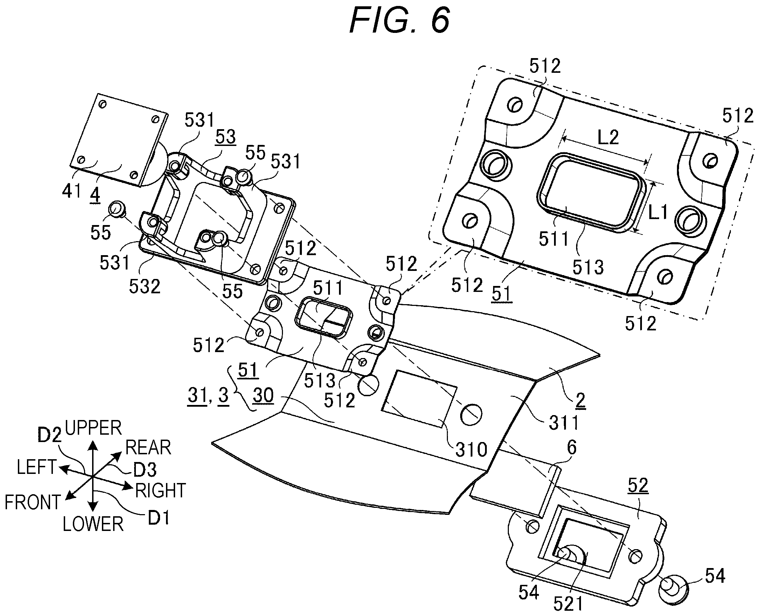

Further, as illustrated in FIGS. 5 and 6, the first panel 31 as the panel member 3 includes a panel body 30 and the support frame 51. The through hole 310 is formed in the panel body 30. The support frame 51 is a member fixed to the panel body 30 so as to close the through hole 310. An opening portion 511 communicating with the through hole 310 is formed in the support frame 51. The opening portion 511 is a through hole penetrating (the support frame 51 of) the first panel 31 in a thickness direction. Here, as an example, the opening portion 511 is opened in a rectangular shape having length in the left-right direction D2. The imaging device 4 is arranged above the first panel 31, that is, outside the heating chamber 2, at a position corresponding to the opening portion 511.

The opening portion 511 is opened in a rectangular shape slightly smaller than the through hole 310. That is, by attaching the support frame 51 to the panel body 30, the panel member 3 (first panel 31) is provided with a hole that is slightly narrower than the through hole 310 and penetrates with size of the through hole 310.

The imaging device 4 is arranged in a posture in which an optical axis of an optical system is inclined downward (obliquely downward) from a horizontal direction such that the optical axis of the optical system passes through substantially the center of the opening portion 511. **In** the present embodiment, as an example, the inclined portion 311 is inclined rearward by 45 degrees. For this reason, the imaging device 4 is also arranged in a posture in which an optical axis of the optical system is inclined rearward by 45 degrees with respect to the vertical direction.

By this, the imaging device 4 arranged outside the heating chamber 2 (above the first panel 31) can capture the inside of the heating chamber 2 (inner space Sp1) through the opening portion 511. That is, the imaging device 4 can capture the inner space Sp1 in a bird's-eye view manner from obliquely forward and upward.

In the present embodiment, as illustrated in FIGS. 4 and 5, the imaging device 4 is supported above the first panel 31, that is, outside the heating chamber 2 by the camera holder 53. The camera holder 53 has, around an optical axis of the optical system of the imaging device 4, a plurality of (here, four) leg portions 531 extending along the optical axis. Here, as an example, the camera holder 53 is made from resin (resin molded product).

The camera holder 53 is attached to the outer side (upper side) of the heating chamber 2 of the panel member 3 in a posture in which one end (lower end) of a plurality of the leg portions 531 faces the panel member 3 (first panel 31) side, and the imaging device 4 is attached to another end (upper end) of a plurality of the leg portions 531. Specifically, the camera holder 53 is fixed to a peripheral portion (the support frame 51) of the opening portion 511 in the first panel 31 by a plurality (here, four) of the screws 55. The imaging device 4 is fixed to a plurality of the leg portions 531 by a fastening tool such as a screw.

For this reason, the imaging device 4 is supported by the camera holder 53 in a state of being separated from the panel member 3 (first panel 31) to the outside (upper side) of the heating chamber 2. Furthermore, since a cavity is also secured between a plurality of the leg portions 531 in the camera holder 53, cooling air can pass around the imaging device 4, and a cooling effect of the imaging device 4 can be easily obtained.

The glass 6 is arranged so as to close the opening portion 511. The glass 6 has transmissivity with respect to at least light in a wavelength range in which the imaging device 4 has sensitivity. That is, the glass 6 has relatively high transmissivity (transparency) with respect to at least light in a visible light region. For this reason, when the glass 6 closes the opening portion 511, the imaging device 4 can capture the inner space Sp1 over the glass 6, that is, through the glass 6.

The glass 6 is attached to the panel member 3 (first panel 31) so as to be sandwiched between the glass holder 52 and the panel member 3 (first panel 31) in an optical axis direction of the optical system of the imaging device 4. Specifically, the glass holder 52 is a frame-shaped member having a through hole 521, and is coupled to the panel member 3 (first panel 31) in a state where the glass 6 is sandwiched between the glass holder 52 and a peripheral portion of the through hole 310 in (the panel body 30 of) the panel member 3.

The glass holder 52 is located on the inner side (lower side) of the heating chamber 2 with respect to the panel body 30 of the first panel 31, and the support frame 51 is located on the outer side (upper side) of the heating chamber 2 with respect to the panel body 30 of the first panel 31. Here, as an example, the glass holder 52 is formed in a rectangular frame shape having length in the left-right direction D2. Further, as an example, the glass holder 52 is made from resin (resin molded article).

Then, the glass holder 52 is fixed to the support frame 51 with a pair of the screws 54 in a state where the panel body 30 and the glass 6 are sandwiched between the glass holder 52 and the support frame 51. In the present embodiment, a pair of the screws 54 are inserted from the inner side of the heating chamber 2, that is, from the glass holder 52 side, and is fastened to the support frame 51 through the panel body 30 of the first panel 31. By this, the glass holder 52 is fixed to the panel body 30 together with the support frame 51. As a result, the glass 6 sandwiched between the glass holder 52 and the panel body 30 is attached to the panel member 3 (first panel 31) so as to close the opening portion 511.

For this reason, the glass 6 is exposed to the inner side (lower side) of the heating chamber 2 through the through hole 521, and is exposed to the outer side (upper side) of the heating chamber 2 through the opening portion 511. Therefore, the imaging device 4 can capture the inner space Sp1 over the glass 6 through the opening portion 511 and the through hole 521.

In a case where the panel member 3 (first panel 31) does not have a two-member configuration including the panel body 30 and the support frame 51, but is formed of a single plate, an opening portion for enabling the imaging device 4 to capture the inner space Sp1 through the panel member 3 is formed in the first panel 31 formed of a single plate. Then, considering that leakage of an electromagnetic wave from the inner space Sp1 may occur at least due to the presence of the opening portion even though the opening portion is closed by the glass 6, it is preferable to suppress leakage of an electromagnetic wave by making the opening portion as small as possible. However, in a case where the first panel 31 is formed of a single plate, leakage of an electromagnetic wave from an opening portion can be suppressed by making the opening portion as small as possible, but a problem that a peripheral edge of the opening portion is shown in the imaging device 4 due to slight misalignment between the opening portion and the imaging device 4 easily occurs.

In view of the above, in the present embodiment, the panel member 3 (first panel 31) includes two members of the panel body 30 and the support frame 51, and the imaging device 4 is fixed to the panel body 30 in a state of being integrated with the support frame 51. By this, the heating cooker 100 according to the present embodiment can easily achieve both prevention of leakage of an electromagnetic wave and securing of a visual field of the imaging device 4.

In short, the heating cooker 100 according to the present embodiment includes the heating chamber 2 and the imaging device 4 as illustrated in FIGS. 5 to 9. The heating chamber 2 has the panel member 3 surrounding the inner space Sp1 capable of accommodating a heating object, and heats a heating object using an electromagnetic wave. The imaging device 4 is arranged outside the heating chamber 2, and captures the inner space Sp1 through the opening portion 511 formed in a part of the panel member 3. The panel member 3 includes the support frame 51 in which the opening portion 511 is formed, and the panel body 30. The through hole 310 communicating with the opening portion 511 is formed in the panel body 30, and the support frame 51 is fixed to the panel body 30. The imaging device 4 is fixed to the panel body 30 by the support frame 51 in a state of being integrated with the support frame 51 interposed between them.

As described above, the panel member 3 includes two members of the panel body 30 and the support frame 51, and then the imaging device 4 is fixed to the panel body 30 with the support frame 51 interposed between them in a state of being integrated with the support frame 51, so that positioning accuracy of the imaging device 4 with respect to the opening portion 511 is improved. That is, by integrating (unitizing) the support frame 51 in which the opening portion 511 is formed and the imaging device 4, a positional relationship between the opening portion 511 and the imaging device 4 can be determined in advance. For this reason, attaching accuracy when the support frame 51 integrated with the imaging device 4 is fixed to the panel body 30 does not affect positioning accuracy between the opening portion 511 and the imaging device 4, and positioning accuracy of the imaging device 4 with respect to the opening portion 511 can be easily improved. Therefore, by making the opening portion 511 as small as possible, it is possible to avoid a problem that a peripheral edge of the opening portion 511 is shown in the imaging device 4 by positioning the opening portion 511 and the imaging device 4 with high accuracy while leakage of an electromagnetic wave from the opening portion 511 is suppressed. As a result, the heating cooker 100 according to the present embodiment has an advantage that both prevention of leakage of an electromagnetic wave and securing of a visual field of the imaging device 4 can be easily achieved.

More specifically, as illustrated in FIGS. 5 and 6, the support frame 51 has an outer peripheral shape slightly larger than the through hole 310 of the panel body 30. That is, the support frame 51 is set to be larger than the through hole 310 in dimensions in both a longitudinal direction and a lateral direction. The support frame 51 is constituted by bending a metal plate, and is formed in a rectangular frame shape having length in the left-right direction D2 with the opening portion 511 formed at a central portion of the metal plate.

The support frame 51 has (four) fixing portions 512 at four corners. The fixing portion 512 has a screw hole to which the screw 55 for fixing the camera holder 53 is fastened. Here, the support frame 51 forms a recessed portion in which four corners are recessed when viewed from the inner side (lower side) of the heating chamber 2, and the recessed portion constitutes the fixing portion 512. That is, a plurality (four) of the fixing portions 512 have a shape recessed toward the outer side (upper side) of the heating chamber 2 as compared with other portions of the support frame 51.

The camera holder 53 has a frame-shaped flange portion 532 continuing to one end (lower end) of a plurality of the leg portions 531. In the present embodiment, as an example, the flange portion 532 is formed in a rectangular frame shape having length in the left-right direction D2. An outer peripheral shape of the flange portion 532 is substantially the same as an outer peripheral shape of the support frame 51. A plurality (four) of the screws 55 inserted from the outer side (upper side) of the heating chamber 2 are fastened to a plurality (four) of the fixing portions 512 of the support frame 51 through holes formed at four corners of the flange portion 532, so that the camera holder 53 is fixed to the support frame 51.

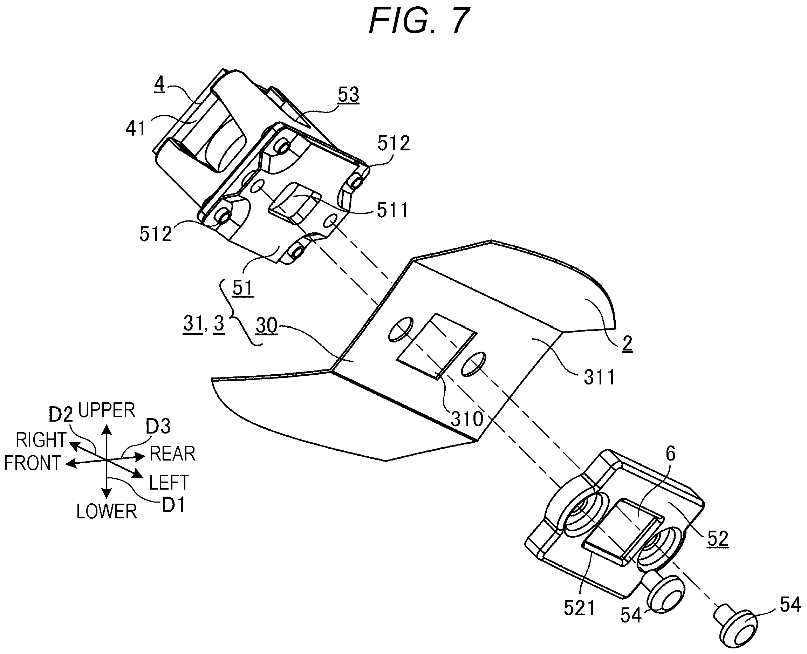

As the camera holder 53 is fixed to the support frame 51 in this manner, as illustrated in FIG. 7, the imaging device 4 is integrated (unitized) with the support frame 51, and a positional relationship between the opening portion 511 and the imaging device 4 is defined. In a state where the imaging device 4 and the support frame 51 are integrated, the glass holder 52 is coupled to the support frame 51 with a pair of the screws 54 so as to sandwich a peripheral portion of the through hole 310 in the panel body 30 between the glass holder 52 and the support frame 51. By this, the support frame 51 integrated (unitized) with the imaging device 4 is fixed to the panel body 30 together with the glass holder 52, and the imaging device 4 is fixed to the panel body 30 with the support frame 51 interposed between them in a state of being integrated with the support frame 51.

Here, the support frame 51 is electrically connected to the panel body 30 by coming into contact with a peripheral portion of the through hole 310 in the panel body 30. By setting the support frame 51 to the same potential as the panel body 30, shielding performance of an electromagnetic wave by the support frame 51 is improved, and an electromagnetic wave is prevented from leaking out of the heating chamber 2 through the through hole 310.

Furthermore, the through hole 310 is opened larger than the opening portion 511. That is, the opening portion 511 is slightly smaller than the through hole 310, and is set to be smaller than the through hole 310 in dimensions in both the longitudinal direction and the lateral direction. For this reason, when the panel member 3 (first panel 31) is viewed from the inner side (lower side) of the heating chamber 2, the opening portion 511 opens on the inner side of the through hole 310 formed in the panel body 30. By this, a peripheral edge of the through hole 310 is not shown in the imaging device 4, and it is easy to secure a visual field of the imaging device 4.

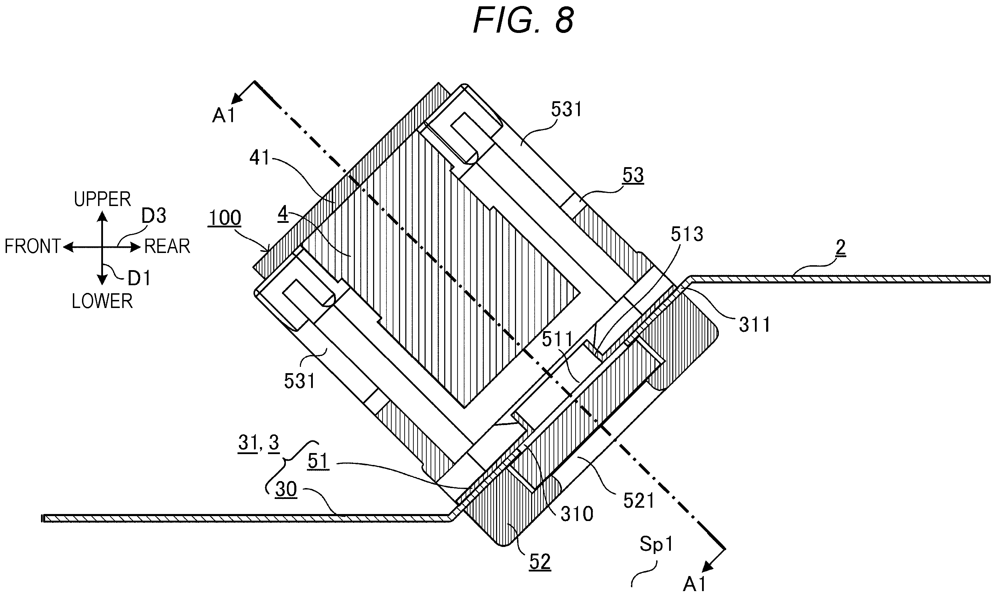

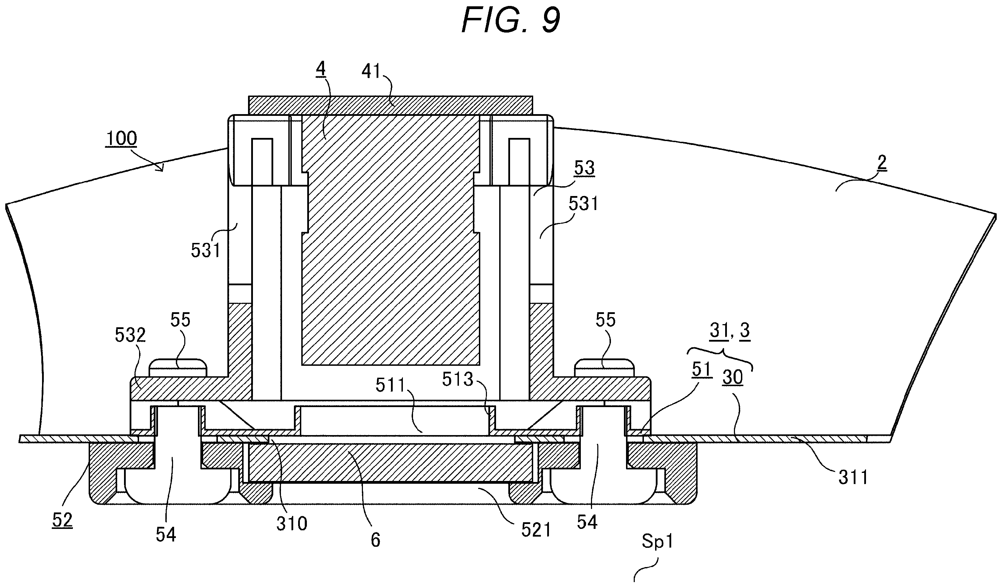

Furthermore, in the present embodiment, the imaging device 4 includes a substrate 41. The substrate 41 is arranged away from the support frame 51. Specifically, as illustrated in FIGS. 8 and 9, the substrate 41 is provided at an end portion on the opposite side (upper side) to the heating chamber 2 in an optical axis direction of the optical system of the imaging device 4, and is a portion fixed to a plurality of the leg portions 531 of the camera holder 53. Since the substrate 41 described above is arranged away from the support frame 51 by the camera holder 53, heat in the heating chamber 2 is less likely to affect the substrate 41, and the imaging device 4 is easily protected from the heat.

In particular, an air path through which an air flow passes is formed between the substrate 41 and the support frame 51. That is, for example, an air flow (cooling air) generated by a cooling fan can pass through a gap between the substrate 41 and the support frame 51. By this, cooling air can pass around the imaging device 4, and a cooling effect of the imaging device 4 can be easily obtained.

Further, the heating cooker 100 according to the present embodiment further includes the glass 6 arranged on the inner side (lower side) of the heating chamber 2 with respect to the support frame 51. By this, an electromagnetic wave, heat, and the like in the heating chamber 2 are less likely to leak out of the heating chamber 2 through the opening portion 511, and the imaging device 4 is easily protected from an electromagnetic wave, heat, and the like.

Further, the support frame 51 is arranged on the inclined portion 311 of the panel member 3. The inclined portion 311 is inclined at a predetermined angle with respect to a horizontal plane. As the imaging device 4 is attached to the inclined portion 311, the imaging device 4 can capture the inside of the heating chamber 2 (inner space Sp1) in a bird's-eye view manner through the opening portion 511. Therefore, even the single imaging device 4 can capture the inside of the heating chamber 2 (inner space Sp1) over a wide range.

The heating cooker 100 according to the present embodiment employs a configuration below with respect to the opening portion 511 in order to easily achieve both prevention of leakage of an electromagnetic wave and securing of a visual field of the imaging device 4.

That is, the heating cooker 100 according to the present embodiment includes the heating chamber 2 and the imaging device 4 as illustrated in FIGS. 5 to 9. The heating chamber 2 has the panel member 3 surrounding the inner space Sp1 capable of accommodating a heating object, and heats a heating object using an electromagnetic wave. The imaging device 4 is arranged outside the heating chamber 2, and captures the inner space Sp1 through the opening portion 511 formed in a part of the panel member 3. Here, the opening portion 511 has a shape corresponding to a shape of a captured image captured and used by the imaging device 4.

A "shape of a captured image" in the present disclosure is, for example, an overall shape of a raw image captured by the imaging device 4 represented by angles of view (viewing angles) in a horizontal direction and a vertical direction, a shape of an image (captured image) obtained by cutting out only a necessary region from the raw image, or the like. That is, in a case where not only an overall shape of a raw image but also a part of the raw image is cut out as a captured image (by trimming) and used for control of the heating cooker 100 or the like, the cut out shape may be used as the "shape of a captured image". An overall shape of a raw image is determined by arrangement of a pixel of an imaging element included in the imaging device 4, the optical system, and the like. In the present embodiment, as an example, it is assumed that an overall shape of a raw image determined mainly by arrangement of a pixel of an imaging element included in the imaging device 4 is the "shape of a captured image".

Then, in the present embodiment, the opening portion 511 has a shape corresponding to such a shape of a captured image. That is, while the imaging device 4 captures the inner space Sp1 through the opening portion 511 formed in a part of (the support frame 51 in) the panel member 3, a shape of the opening portion 511 is designed to correspond to a shape of a captured image. Therefore, while leakage of an electromagnetic wave from the opening portion 511 is suppressed by making the opening portion 511 as small as possible, a shape of the opening portion 511 corresponds to a shape of a captured image, so that it is possible to avoid a problem that a peripheral edge of the opening portion 511 is shown in the imaging device 4. As a result, the heating cooker 100 according to the present embodiment has an advantage that both prevention of leakage of an electromagnetic wave and securing of a visual field of the imaging device 4 can be easily achieved.

More specifically, in the imaging device 4, angles of view are different between the horizontal direction and the vertical direction. The opening portion 511 has a rectangular shape having a long side in the same direction as a long side of a captured image. **In** the present embodiment, as an example, the imaging device 4 obtains a captured image that has an angle of view in the horizontal direction (lateral direction) larger than an angle of view in the vertical direction (longitudinal direction) and has length in the left-right direction D2. For this reason, similarly to a captured image, the opening portion 511 is also formed in a rectangular shape having length in the left-right direction D2.

By this, it is possible to avoid cutoff of a captured image by the opening portion 511 while the opening portion 511 is made as small as possible, and it is easy to achieve both prevention of leakage of an electromagnetic wave and securing of a visual field of the imaging device 4.

In particular, the opening portion 511 has a shape similar to that of a captured image. That is, a shape of the opening portion 511 is in a similarity relationship with a shape of a captured image. In the present embodiment, since both the opening portion 511 and a captured image have a rectangular shape having length in the left-right direction D2, their aspect ratios are substantially the same.

As an example, if an aspect ratio of a captured image is "length : width = 1 : 1.8", an aspect ratio of the opening portion 511 is also set to "length : width = 1 : 1.8". That is, a ratio between a longitudinal dimension L1 and a lateral dimension L2 of the opening portion 511 shown in a callout in FIG. 6 is set to "L1 : L2 = 1 : 1.8". However, the term "similar" as used here includes not only the fact that aspect ratios and vertex angles completely coincide with each other, but also the fact that aspect ratios and vertex angles slightly differ from each other. For example, in a case where an aspect ratio of a captured image is "1 : 1.8", an aspect ratio of the opening portion 511 may be set in a range of "1 : 1.6" or more and "1 : 2.0" or less.

By this, it is possible to avoid cutoff of a captured image by the opening portion 511 while the opening portion 511 is made as small as possible, and it is easy to achieve both prevention of leakage of an electromagnetic wave and securing of a visual field of the imaging device 4.

Furthermore, in the present embodiment, a peripheral wall 513 (see FIG. 6) arranged on a peripheral edge of the opening portion 511 in the panel member 3 and surrounding the opening portion 511 is further included. Specifically, the peripheral wall 513 includes a burring portion erected on a peripheral edge of the opening portion 511 in the support frame 51 made from metal, and surrounds the opening portion 511 over the entire circumference.

By this, when the opening portion 511 has the same shape, leakage of an electromagnetic wave to the outside of the heating chamber 2 through the opening portion 511 can be suppressed as compared with a case where the peripheral wall 513 is not provided. Therefore, it is easy to achieve both prevention of leakage of an electromagnetic wave and securing of a visual field of the imaging device 4.

The peripheral wall 513 protrudes from a peripheral edge of the opening portion 511 of the panel member 3 toward the outside of the heating chamber 2. That is, the peripheral wall 513 is formed so as to rise from a peripheral edge of the opening portion 511 in the support frame 51 toward the outside (upper side) of the heating chamber 2. As an example, a protruding amount (height) of the peripheral wall 513 is equal to or more than thickness of the support frame 51, and is 1 mm or more and 3 mm or less.

By this, when the opening portion 511 has the same shape, "vignetting" in which the peripheral wall 513 is shown in the imaging device 4 hardly occurs as compared with a case where the peripheral wall 513 protrudes toward the inside of the heating chamber 2. Therefore, it is easy to achieve both prevention of leakage of an electromagnetic wave and securing of a visual field of the imaging device 4.

Further, in the present embodiment, the opening portion 511 has a round shape at a corner portion. That is, four corners of the opening portion 511 having a rectangular shape are not sharp corners but round-chamfered. Accordingly, leakage of an electromagnetic wave to the outside of the heating chamber 2 through the opening portion 511 can be suppressed as compared with the opening portion 511 having a sharp corner. Therefore, it is easy to achieve both prevention of leakage of an electromagnetic wave and securing of a visual field of the imaging device 4.

### [3] VARIATION

Hereinafter, a variation of the first embodiment will be listed. Variations described below can be appropriately combined and applied.

The glass 6 may have a function of limiting (regulating) transmission of an electromagnetic wave (microwave) used for heating a heating object. That is, the glass 6 may be, for example, an electromagnetic wave shielding glass (electromagnetic wave shield glass) that shields against and/or absorbs an electromagnetic wave in a high frequency band such as a microwave to limit passage of the electromagnetic wave.

Further, the opening portion 511 only needs to be arranged at any position of the panel member 3, and may be provided, for example, in a rear end portion of the first panel 31, or may be provided in the second panel 32, the third panel 33, the fourth panel 34, or the fifth panel 35. Furthermore, in a case where the imaging device 4 is arranged on the door body 22, the opening portion 511 may be provided in a panel member constituting an inner surface of the door body 22.

Further, various components such as the glass holder 52 and the camera holder 53 are not limited to those made from resin, and for example, at least a part of such components may be made from metal or the like. Further, the support frame 51 is not limited to one that is made from metal, and for example, at least a part of the support frame 51 may be made from resin (resin molded product), or may be an insert-molded product in which a metal plate is inserted into a resin molded product.

Further, a shape of the opening portion 511 is not limited to a rectangular shape, and may be, for example, a square shape, a circular shape, an elliptical shape, a polygonal shape, or the like.

Further, it is not essential for the panel member 3 to include the support frame 51 and the panel body 30, and the opening portion 511 may be formed in a panel member (the first panel 31) constituted by a single plate.

Further, it is not essential for the opening portion 511 to have a shape corresponding to a shape of a captured image captured and used by the imaging device 4, and a shape of the opening portion 511 does not need to be similar to a shape of a captured image.

Further, it is not essential for the peripheral wall 513 to protrude toward the outside of the heating chamber 2 in the panel member 3, and the peripheral wall 513 may protrude toward the inside of the heating chamber 2 in the panel member 3. Furthermore, the peripheral wall 513 is not an essential configuration in the first place, and the peripheral wall 513 may be omitted.

### SUPPLEMENTARY NOTE OF INVENTION

Hereinafter, an outline of the invention extracted from the above-described embodiment will be additionally described. Note that each configuration and each processing function described in a supplementary note below can be selected and optionally combined.

### SUPPLEMENTARY NOTE 1

A heating cooker including:
a heating chamber including a panel member surrounding an inner space capable of accommodating a heating object, the heating chamber being configured to heat the heating object by using an electromagnetic wave; and
an imaging device that is arranged outside the heating chamber and configured to capture the inner space through an opening portion formed in a part of the panel member, in which
the panel member includes a support frame in which the opening portion is formed, and a panel body in which a through hole communicating with the opening portion is formed and to which the support frame is fixed, and
the imaging device is fixed to the panel body with the support frame interposed between them in a state of being integrated with the support frame.

### SUPPLEMENTARY NOTE 2

The heating cooker according to Supplementary note 1, in which the through hole opens wider than the opening portion.

### SUPPLEMENTARY NOTE 3

The heating cooker according to Supplementary note 1 or 2, in which
the imaging device includes a substrate, and
the substrate is arranged away from the support frame.

### SUPPLEMENTARY NOTE 4

The heating cooker according to Supplementary note 3, in which an air path through which an air flow passes is formed between the substrate and the support frame.

### SUPPLEMENTARY NOTE 5

The heating cooker according to any of Supplementary notes 1 to 4, further including glass arranged on an inner side of the heating chamber with respect to the support frame.

### SUPPLEMENTARY NOTE 6

The heating cooker according to any of Supplementary notes 1 to 5, in which the support frame is arranged in an inclined portion of the panel member.

## Claims

1. A heating cooker (100) comprising:
a heating chamber (2) including a panel member (3) surrounding an inner space (Sp1) capable of accommodating a heating object, the heating chamber (2) being configured to heat the heating object by using an electromagnetic wave; and
an imaging device (4) that is arranged outside the heating chamber (2) and configured to capture the inner space (Sp1) through an opening portion (511) formed in a part of the panel member (3), wherein
the panel member (3) includes a support frame (51) in which the opening portion (511) is formed, and a panel body (30) in which a through hole (310) communicating with the opening portion (511) is formed and to which the support frame (51) is fixed, and
the imaging device (4) is fixed to the panel body (30) with the support frame (51) interposed therebetween in a state of being integrated with the support frame (51).

2. The heating cooker (100) according to claim 1, wherein the through hole (310) opens wider than the opening portion (511).

3. The heating cooker (100) according to claim 1 or 2, wherein
the imaging device (4) includes a substrate (41), and
the substrate (41) is arranged away from the support frame (51).

4. The heating cooker (100) according to claim 3, wherein an air path through which an air flow passes is formed between the substrate (41) and the support frame (51).

5. The heating cooker (100) according to claim 1 or 2, further comprising glass (6) arranged on an inner side of the heating chamber (2) with respect to the support frame (51).

6. The heating cooker (100) according to claim 1 or 2, wherein the support frame (51) is arranged in an inclined portion (311) of the panel member (3).
